# FASCICULE DE BREVET EUROPEEN

(11) **EP 2 724 120 B1**
(45) Date de publication et mention de la délivrance du brevet: **18.05.2016**
(21) Numéro de dépôt: 12730834.4
(22) Date de dépôt: 12.06.2012
(51) Int. Cl.: G01D 5/14, G01D 5/20

(54) **GUIDE MAGNÉTIQUE**
MAGNETISCHE FÜHRUNG
MAGNETIC GUIDE

(30) Priorité: 21.06.2011 FR 1155461
(43) Date de publication de la demande: 30.04.2014
(73) Titulaire: Valeo Systèmes d'Essuyage, 78321 Le Mesnil Saint Denis (FR)
(72) Inventeur: CAILLAUD, Dominique, F-86100 Chatellerault (FR); JENDRASZCZAK, Jean, F-86100 Châtellerault (FR); PICHARD, Stéphane, F-37260 Thilouze (FR); RIBEIRO, Eduardo, 13.036-140 Campinas SP (BR)
(74) Mandataire: Léveillé, Christophe
(86) Numéro de dépôt international: PCT/EP2012/061132
(87) Numéro de publication internationale: WO 2012/175376

(56) Documents cités:
- EP-A1- 0 936 723
- EP-A1- 1 600 738
- DE-A1- 10 357 346
- DE-B1- 2 612 464
- FR-A1- 2 717 324
- JP-A- 2004 129 456

## Description

L'invention concerne un dispositif de détection magnétique de la position de repos de l'induit d'un moteur à courant continu.

Les moteurs à courant continu, notamment les moteurs d'essuie - glaces de véhicules automobiles, comportent un dispositif de détection de la position de repos ou d'arrêt du moteur et de l'induit de ce dernier.

De manière générale, ce type de dispositif comporte un capteur magnétique de cette position de repos, placé sur une plaquette support, telle qu'une plaquette à circuit imprimé, montée sur la carcasse à l'extérieur du moteur. La position de repos ou d'arrêt du moteur et de l'induit est définie par un marqueur magnétique, tel qu'un aimant permanent, placé sur la roue du moteur solidaire de l'induit. La roue du moteur et l'induit, et, en conséquence, le marqueur magnétique, sont entraînés continûment en rotation lors du fonctionnement du moteur.

Le capteur magnétique doit être placé dans le plan de rotation de la roue du moteur et du marqueur magnétique, à une distance minimale de ce dernier à la position de repos ou d'arrêt de l'induit et du marqueur magnétique.

Afin d'assurer la transformation du mouvement de rotation continue de l'induit et de la roue en un mouvement de va et vient alternatif, dans le but de procéder à l'entraînement corrélatif des balais d'essuie-glaces sur le pare-brise ou la vitre arrière du véhicule, un système de bielle - manivelle est prévu dans la carcasse du moteur, au voisinage de la roue du moteur.

L'introduction nécessaire d'un tel système présente l'inconvénient d'augmenter considérablement l'encombrement des parties tournantes et de transmission du mouvement de va et vient alternatif, et finalement les dimensions hors tout du moteur, et, en conséquence, d'augmenter de manière critique la distance séparant le capteur magnétique et le marqueur magnétique en position d'arrêt, lorsque le capteur magnétique est placé à l'extérieur de la carcasse du moteur. Une telle augmentation nuit à la précision de la détection de la position de repos ou d'arrêt de l'induit, et, finalement, à la fiabilité de l'ensemble.

Parmi les solutions proposées pour réduire la distance effective entre le capteur magnétique et le marqueur magnétique, une solution consistant à disposer la plaquette de circuit imprimé à l'intérieur de la carcasse du moteur et à placer le capteur magnétique sur un bras ou une protubérance de la plaquette du circuit imprimé, à une distance du marqueur magnétique de l'ordre de quelques millimètres, a été décrite par le brevet US 6 703 732.

Une telle solution donne satisfaction quant à la précision et à la fiabilité de la détection de la position de repos ou d'arrêt de l'induit du moteur. Elle présente toutefois l'inconvénient de nécessiter l'introduction du capteur et de la plaquette de circuit imprimé supportant ce dernier au voisinage des parties tournantes. Un tel inconvénient se traduit par des contraintes importantes au niveau du processus de fabrication, rendant ce dernier plus complexe et plus onéreux.

La présente invention a pour objet de remédier aux inconvénients précités par la mise en oeuvre d'un dispositif de détection magnétique de la position de repos de l'induit d'un moteur à courant continu dans lequel la distance physique entre le capteur magnétique et le marqueur magnétique en position de repos de la roue du moteur peut-être sensiblement indifférente.

Un autre objet de la présente invention est en outre la mise en oeuvre d'un dispositif de détection magnétique de la position de repos de l'induit d'un moteur à courant continu dans lequel le capteur magnétique peut être déporté à une distance physique sensiblement quelconque de la position du marqueur magnétique en position de repos ou d'arrêt de l'induit du moteur, sans nuire aucunement à la précision et la fiabilité de l'ensemble.

Le dispositif de détection magnétique de la position de repos de l'induit d'un moteur à courant continu, objet de l'invention, comporte un capteur magnétique de la position de repos placé sur une plaquette montée sur la carcasse du moteur. La position de repos est définie par un marqueur magnétique placé sur la roue du moteur solidaire de l'induit, la roue et l'induit étant entraînés continûment en rotation en fonctionnement du moteur. Le capteur magnétique est placé à une distance déterminée du marqueur magnétique en position de repos de l'induit du moteur à courant continu. Le dispositif objet de l'invention est remarquable en ce qu'il comporte en outre un guide magnétique placé entre le capteur magnétique et le marqueur magnétique, ce guide magnétique assurant la canalisation du flux magnétique engendré par le marqueur magnétique sur la distance déterminée.

Le dispositif objet de l'invention est en outre remarquable en ce que le guide magnétique est constitué par un élément en fer doux.

Le dispositif objet de l'invention est également remarquable en ce que le guide magnétique est constitué par un élément en ferrite.

Le dispositif objet de l'invention est également remarquable en ce que le guide magnétique est constitué par un élément en ferrite en poudre magnétique compressée et recuite.

Le dispositif objet de l'invention est également remarquable en ce que le guide magnétique est formé par une tôle en fer doux emboutie et/ou découpée.

Le dispositif objet de l'invention est également remarquable en ce que le guide magnétique est conformé de façon à être engagé dans un logement ménagé dans la carcasse du moteur, ce logement s'étendant sensiblement sur toute la distance déterminée séparant ledit capteur magnétique dudit marqueur magnétique en position de repos de l'induit du moteur.

Le dispositif objet de l'invention est en outre remarquable en ce que le guide magnétique est conformé selon une tige rectiligne, ou une tige en forme de L, permettant de déporter le capteur magnétique du voisinage du trajet du marqueur magnétique lors du mouvement de la roue.

L'invention a en outre pour objet un guide magnétique de canalisation et de guidage du flux magnétique engendré par un marqueur magnétique placé sur la roue d'un moteur à courant continu vers un capteur magnétique. Ce guide magnétique est remarquable en ce qu'il est formé par un élément en matériau magnétique et présente au moins une partie centrale oblongue de section sensiblement de révolution, cette partie centrale assurant la canalisation du flux magnétique et comprenant une face d'entrée du flux magnétique engendré par le marqueur magnétique et une face de sortie du flux magnétique canalisé.

Le guide magnétique objet de l'invention est en outre remarquable en ce que la section sensiblement de révolution est de forme rectangulaire, octogonale, hexagonale, circulaire.

Le guide magnétique objet de l'invention est remarquable en ce que l'élément en matériau magnétique comprend, outre ladite partie centrale, au moins une terminaison d'extrémité placée entre la partie centrale et la face d'entrée du flux magnétique. Cette terminaison d'extrémité est orientée orthogonalement à la partie centrale.

Le dispositif de détection magnétique de la position d'arrêt de l'induit d'un moteur à courant continu et le guide magnétique, objets de l'invention, trouvent application à la fabrication de moteurs à courant continu, notamment de moteurs d'essuie-glaces de véhicules automobiles.

Ils seront mieux compris à la lecture de la description et à l'observation des dessins ci après dans lesquels :
- la figure 1 représente, à titre purement illustratif, un schéma de mise en oeuvre du dispositif de détection magnétique de la position d'arrêt de l'induit d'un moteur à courant continu, selon une vue en coupe suivant le plan longitudinal de symétrie du moteur, dans un premier mode de réalisation ;
- la figure 2 représente, à titre purement illustratif, un schéma de mise en oeuvre du dispositif de détection magnétique de la position d'arrêt de l'induit d'un moteur à courant continu, selon une vue en coupe suivant le plan longitudinal de symétrie du moteur, dans un deuxième mode de réalisation ;
- la figure 3a représente à titre purement illustratif, une vue en perspective d'un guide magnétique conforme à l'objet de l'invention, dans un premier mode de réalisation ;
- la figure 3b représente à titre purement illustratif, une vue en perspective d'un guide magnétique conforme à l'objet de l'invention, dans un deuxième mode de réalisation ;
- la figure 3c représente à titre purement illustratif, une vue en perspective d'un guide magnétique conforme à l'objet de l'invention, dans un troisième mode de réalisation.

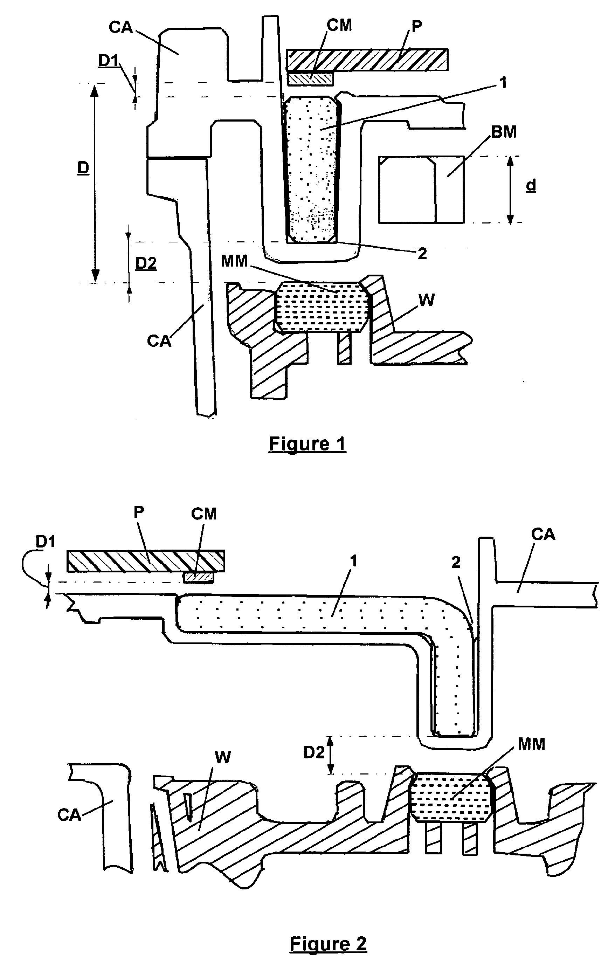

Une description plus détaillée du dispositif de détection magnétique de la position de repos ou d'arrêt de l'induit d'un moteur à courant continu, conforme à l'objet de l'invention, sera maintenant donnée en relation avec la figure 1, dans un premier mode de réalisation. Le plan de la figure 1 correspond au plan longitudinal de symétrie du moteur.

En référence à la figure précitée, on indique que, de manière classique, le dispositif précité comporte un capteur magnétique CM de la position de repos de l'induit, ce capteur magnétique étant placé sur une plaquette P, telle qu'une plaquette à circuit imprimé. Cette plaquette est montée au voisinage de la carcasse CA du moteur, à l'extérieur de ce dernier. La position de repos de l'induit et de la roue W du moteur est définie par un marqueur magnétique MM placé sur la roue W du moteur, solidaire de l'induit. En fonctionnement du moteur, la roue W et l'induit sont entraînés continûment en rotation. Lorsque la roue W et l'induit passent par la position de repos ou d'arrêt, c'est-à-dire au sommet de la course en rotation du marqueur magnétique MM entraîné par la roue W, ainsi que représenté sur la figure 1, le capteur magnétique CM est placé à une distance déterminée D du marqueur magnétique MM.

Dans ce type de moteur, en particulier lorsque le moteur est un moteur d'essuie-glaces de véhicules automobiles, un système bielle-manivelle BM placé au voisinage de la roue W permet de transformer le mouvement de rotation continue de la roue et de l'induit du moteur en un mouvement de va-et-vient alternatif, permettant l'actionnement des balais d'essuie-glaces précités. La position de repos ou d'arrêt de l'induit du moteur à courant continu correspond à la position d'arrêt des ballets d'essuie-glaces.

Ainsi qu'on l'a représentée sur la figure 1, l'existence du système bielle-manivelle à l'intérieur du moteur, c'est-à-dire dans l'enceinte de ce dernier constituée par la carcasse CA, introduit un encombrement supplémentaire représenté par la distance d ajoutée à la distance physique capteur magnétique CM, marqueur magnétique MM. Cette distance physique est nécessairement très supérieure à plusieurs centimètres, ce qui nuit à la précision et à la fiabilité de la détection du point de repos ou d'arrêt de l'induit du moteur, lorsque le capteur magnétique CM est placé à l'extérieur du moteur sur le ou au voisinage de la carcasse CA.

On note en particulier que la distance D séparant, dans une telle situation, le capteur magnétique CM du marqueur magnétique MM est au moins égale à la dimension d'encombrement du système bielle-manivelle dans le plan de la figure 1, augmentée des distances séparant le capteur magnétique CM de la face externe de la carcasse CA et le marqueur magnétique MM de la face interne de la carcasse CA.

Ainsi qu'on l'observera sur la figure 1, le dispositif objet de l'invention comporte, dans le but d'assurer une détection précise et fiable de la position de repos ou d'arrêt de l'induit du moteur à courant continu, un guide magnétique 1 placé entre le capteur magnétique CM et le marqueur magnétique MM et permettant d'assurer la canalisation du flux magnétique engendré par le marqueur magnétique MM sur la distance D séparant ces derniers. Outre le phénomène de canalisation du flux magnétique précité, le guide magnétique 1 permet ainsi, du fait de la canalisation et de la concentration du flux magnétique considéré, de réduire la distance fonctionnelle de séparation du capteur magnétique CM et du marqueur magnétique MM sensiblement à la somme des distances intermédiaires D1 et D2 entre les extrémités du guide magnétique 1 et le capteur magnétique CM respectivement le marqueur magnétique MM.

On comprend ainsi que, grâce à la mise en oeuvre du dispositif de détection magnétique de la position de repos ou d'arrêt de l'induit d'un moteur à courant continu, conforme à l'objet de la présente invention, et en particulier du guide magnétique 1 précité, la précision et la fiabilité de la détection du point d'arrêt ou de repos de l'induit du moteur à courant continu est ainsi améliorée, les distances D1 et D2 pouvant être optimisées par construction.

D'une manière plus spécifique, on indique que le guide magnétique 1 est avantageusement constitué par un élément en fer doux. En particulier il peut être formé par une tôle en fer doux emboutie et/ou découpée, ou, le cas échéant par un empilement de tôles magnétiques par exemple.

Dans un mode de mise en oeuvre préférentiel non limitatif, on indique également que le guide magnétique 1 peut avantageusement être constitué par un élément en ferrite. L'élément en ferrite précité peut, de manière particulièrement avantageuse, être constitué en poudre magnétique compressée et recuite et ainsi façonné par frittage par exemple. La poudre magnétique peut-être constituée par une poudre comportant un pourcentage déterminé de ferrite.

Ainsi qu'on l'observera en outre sur la figure 1, le guide magnétique 1 est conformé de façon à être engagé dans un logement 2 ménagé dans la carcasse CA du moteur, à l'extérieur de ce dernier. On comprend, en particulier, que, la carcasse CA étant, par exemple, en matériau plastique, le logement 2 peut être venu de matière par moulage et/ou injection de la carcasse CA.

Ainsi qu'on l'observera de même sur la figure 1 précitée, le logement 2 s'étend sensiblement sur toute la distance déterminée D séparant le capteur magnétique CM du marqueur magnétique MM en position de repos de l'induit du moteur, c'est-à-dire ainsi que représenté sur la figure 1. On comprend alors que le guide magnétique 1 s'étend sensiblement sur la même longueur de façon à couvrir la quasi-totalité de la distance D précitée. Les distances D1 et D2 peuvent alors être optimisées, c'est-à-dire réduites au minimum par construction. La distance D1 peut-être inférieure ou égale à 1 mm et la distance D2 peut être réduite entre 5 et 8 millimètres, compte tenu de l'épaisseur de la carcasse CA.

En référence à la figure 1 précitée on comprend que, dans le mode de réalisation correspondant, le guide magnétique 1 est conformé selon une tige rectiligne, telle qu'un cylindre ou une tige tronconique par exemple permettant l'insertion à force du guide magnétique 1 dans le logement 2.

Un deuxième mode de mis en oeuvre non limitatif du dispositif objet de la présente invention est maintenant décrit en liaison avec la figure 2. Le plan de la figure 2 correspond au plan longitudinal de symétrie du moteur.

En référence à la figure précitée, on indique que le guide magnétique1 peut avantageusement être conformé selon une tige en forme de L permettant de déporter le montage du capteur magnétique CM du voisinage du trajet du marqueur magnétique MM, lors du mouvement de la roue W. Sur la figure 2, on comprend, en particulier, que la branche longue du guide magnétique 1 en forme de L permet de déporter latéralement le capteur magnétique CM dans une direction orthogonale au plan de rotation du marqueur magnétique MM, orthogonal au plan de la figure 2, d'une distance donnée déterminée par construction. Le déport précité permet de rendre le montage de la plaquette support P, et, bien entendu du capteur magnétique CM, plus simple et plus accessible, dans la mesure où le montage de ces derniers n'est plus directement tributaire de la position du plan de rotation du marqueur magnétique MM.

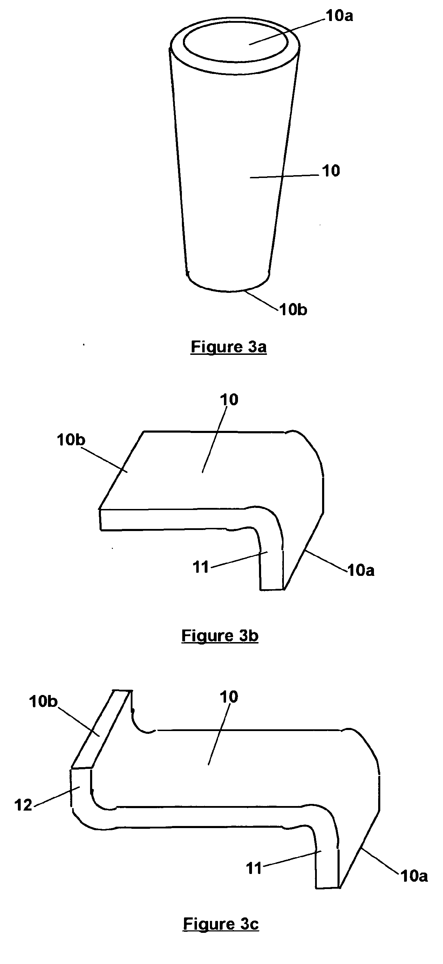

Une description plus détaillée d'un guide magnétique 1 de canalisation et de guidage du flux magnétique engendré par un marqueur magnétique MM placé sur la roue W d'un moteur à courant continu vers un capteur magnétique CM, conforme à l'objet de la présente invention, sera maintenant donnée en liaison avec la figure 3a. Sur la figure précitée, on peut observer que le guide magnétique 1 est formé par un élément en matériau magnétique et présente au moins une partie centrale oblongue 10 de section sensiblement de révolution. La section de révolution peut par exemple être circulaire, ovale, parallélépipédique, hexagonale, octogonale ou autre. La partie centrale 10 précitée assure la canalisation du flux magnétique et comprend une face d'entrée 10a du flux magnétique engendré par le marqueur magnétique MM et une face de sortie 10b du flux magnétique canalisé.

Dans un autre mode de réalisation tel que représenté en figure 3b, plus particulièrement destiné au mode de mise en oeuvre spécifique du dispositif objet de l'invention tel que représenté en figure 2, le guide 1 et l'élément en matériau magnétique comprennent au moins, outre la partie centrale 10, une terminaison d'extrémité 11 placée entre la partie centrale 10 et la face d'entrée 10a du flux magnétique. Dans ce mode de réalisation, le guide magnétique correspond sensiblement à une lame en forme de L.

Enfin dans un autre mode de réalisation, tel que représenté en figure 3c, le guide magnétique 1 et l'élément en matériau magnétique ,comprennent outre la terminaison d'extrémité 11 précitée, une autre terminaison d'extrémité 12 placée entre la partie centrale 10 et la face de sortie du flux magnétique 10b. La deuxième terminaison d'extrémité 12 est orientée orthogonalement à la partie centrale 10 dans une direction opposée à celle de la terminaison d'extrémité 11. On comprend que, dans ce mode de réalisation, tel que représenté en figure 3c, la partie terminale d'extrémité 12 et la face de sortie du flux magnétique 10b peuvent permettre avantageusement une concentration de l'intensité du flux magnétique au niveau du capteur magnétique CM. La face de sortie du flux magnétique 10b et les dimensions de cette dernière peuvent, avantageusement, dans ce but, être adaptées à celles du capteur magnétique CM.

## Revendications

1. Dispositif de détection magnétique de la position de repos de l'induit d'un moteur à courant continu, ledit dispositif comportant un capteur magnétique (CM) de la position de repos placé sur une plaquette montée sur la carcasse (CA) du moteur, ladite position de repos étant définie par un marqueur magnétique (MM) placé sur la roue (W) du moteur solidaire de l'induit, la roue (W) et l'induit étant entraînés continûment en rotation en fonctionnement du moteur, ledit capteur magnétique (CM) étant placé à une distance déterminée du marqueur magnétique (MM) en position de repos de l'induit du moteur à courant continu, **caractérisé en ce que** ledit dispositif comporte en outre un guide magnétique (1) placé entre ledit capteur magnétique (CM) et ledit marqueur magnétique (MM), ledit guide magnétique (1) assurant la canalisation du flux magnétique engendré par ledit marqueur magnétique (MM) sur ladite distance déterminée.

2. Dispositif selon la revendication 1, dans lequel ledit guide magnétique (1) est constitué par un élément en fer doux.

3. Dispositif selon la revendication 1, dans lequel ledit guide magnétique (1) est constitué par un élément en ferrite.

4. Dispositif selon la revendication 3, dans lequel ledit guide magnétique (1) est constitué par un élément en ferrite en poudre magnétique compressée et recuite.

5. Dispositif selon la revendication 2, dans lequel ledit guide magnétique (1) est formé par une tôle en fer doux emboutie et/ou découpée.

6. Dispositif selon l'une des revendications 1 à 5, dans lequel ledit guide magnétique (1) est conformé de façon à être engagé dans un logement (2) ménagé dans la carcasse (CA) du moteur, ledit logement (2) s'étendant sensiblement sur toute la distance déterminée (D)séparant ledit capteur magnétique (CM) dudit marqueur magnétique (MM) en position de repos de l'induit du moteur.

7. Dispositif selon l'une des revendications 1 à 6, dans lequel ledit guide magnétique (1) est conformé selon une tige rectiligne ou une tige en forme de L permettant de déporter ledit capteur magnétique (CM) du voisinage du trajet du marqueur magnétique (MM) lors du mouvement de la roue (W).

8. Dispositif selon l'une des revendications 1 à 7, dans lequel ledit guide magnétique (1) est formé par un élément en matériau magnétique et présente au moins une partie centrale oblongue (10) de section sensiblement de révolution, ladite partie centrale assurant la canalisation du flux magnétique et comprenant une face d'entrée (10a) du flux magnétique engendré par le marqueur magnétique (MM) et une face de sortie (10b) du flux magnétique canalisé.

9. Dispositif selon la revendication 8, dans lequel la section sensiblement de révolution est de forme rectangulaire, octogonale, hexagonale, circulaire.

10. Dispositif selon la revendication 8 ou 9, dans lequel ledit élément en matériau magnétique comprend au moins, outre ladite partie centrale (10), une terminaison d'extrémité (11) placée entre ladite partie centrale (10) et ladite face d'entrée (10a) du flux magnétique, ladite terminaison d'extrémité (11) étant orientée orthogonalement à ladite partie centrale (10).

11. Dispositif selon la revendication 10, dans lequel ledit élément en matériau magnétique comprend en outre une autre terminaison d'extrémité (12) placée entre ladite partie centrale (10) et ladite face de sortie (10b) du flux magnétique, ladite autre terminaison d'extrémité (12) étant orientée orthogonalement à ladite partie centrale (10), dans une direction opposée à celle de la terminaison d'extrémité (11).

12. Moteur à courant continu, notamment d'essuie-glace de véhicule automobile, **caractérisé en ce qu'**il comporte un dispositif tel que défini dans l'une quelconque des revendications 1 à 11.

13. Moteur à courant continu selon la revendication précédente, comportant un système bielle-manivelle (BM) placé au voisinage de ladite roue (W), ledit système bielle-manivelle (BM) permettant de transformer le mouvement de rotation continue de ladite roue (W) et de l'induit du moteur en un mouvement de va-et-vient alternatif, ledit mouvement de va-et-vient alternatif permettant par exemple l'actionnement de balais d'essuie-glace.

14. Moteur à courant continu selon l'une quelconque des revendications 12 et 13, dans lequel la distance (D1) entre le guide magnétique (1) et le capteur magnétique (CM) est inférieure ou égale à 1 mm, et la distance (D2) entre le guide magnétique (1) et le marqueur magnétique (MM) est comprise entre 5 et 8 mm.

15. Moteur à courant continu selon l'une quelconque des revendications 12 à 14, dans lequel le flux magnétique engendré par ledit marqueur magnétique (MM) traverse la carcasse (CA) du moteur pour rejoindre ledit guide magnétique (1).

## Patentansprüche

1. Magnetische Erfassungsvorrichtung der Ruhestellung des Ankers eines Gleichstrommotors, wobei die Vorrichtung einen Magnetfühler (CM) der Ruhestellung aufweist, der auf einer auf das Gehäuse (CA) des Motors montierten Platte angeordnet ist, wobei die Ruhestellung durch einen auf dem Rad (W) des Motors fest mit dem Anker verbunden angeordneten Magnetmarker (MM) definiert wird, wobei das Rad (W) und der Anker im Betrieb des Motors kontinuierlich in Drehung versetzt werden, wobei der Magnetfühler (CM) in der Ruhestellung des Ankers des Gleichstrommotors in einem bestimmten Abstand vom Magnetmarker (MM) angeordnet ist, **dadurch gekennzeichnet, dass** die Vorrichtung außerdem eine Magnetführung (1) aufweist, die zwischen dem Magnetfühler (CM) und dem Magnetmarker (MM) angeordnet ist, wobei die Magnetführung (1) die Kanalisierung des vom Magnetmarker (MM) erzeugten Magnetflusses über den bestimmten Abstand gewährleistet.

2. Vorrichtung nach Anspruch 1, wobei die Magnetführung (1) aus einem Element aus Weicheisen besteht.

3. Vorrichtung nach Anspruch 1, wobei die Magnetführung (1) aus einem Element aus Ferrit besteht.

4. Vorrichtung nach Anspruch 3, wobei die Magnetführung (1) aus einem Element aus Ferrit aus komprimiertem und geglühtem Magnetpulver besteht.

5. Vorrichtung nach Anspruch 2, wobei die Magnetführung (1) von einem Blech aus tiefgezogenem und/oder geschnittenem Weicheisen geformt wird.

6. Vorrichtung nach einem der Ansprüche 1 bis 5, wobei die Magnetführung (1) so gestaltet ist, dass sie in eine im Gehäuse (CA) des Motors ausgesparte Aufnahme (2) eingeführt wird, wobei die Aufnahme (2) sich im Wesentlichen über den ganzen bestimmten Abstand (D) erstreckt, der in der Ruhestellung des Ankers des Motors den Magnetfühler (CM) vom Magnetmarker (MM) trennt.

7. Vorrichtung nach einem der Ansprüche 1 bis 6, wobei die Magnetführung (1) gemäß einer geradlinigen Stange oder einer Stange in Form eines L gestaltet ist, die es ermöglicht, den Magnetfühler (CM) von der Nähe der Strecke des Magnetmarkers (MM) bei der Bewegung des Rads (W) weg zu verlagern.

8. Vorrichtung nach einem der Ansprüche 1 bis 7, wobei die Magnetführung (1) von einem Element aus Magnetmaterial geformt wird und mindestens einen länglichen zentralen Bereich (10) mit im Wesentlichen drehsymmetrischem Querschnitt aufweist, wobei der zentrale Bereich die Kanalisierung des Magnetflusses gewährleistet und eine Eingangsseite (10a) des vom Magnetmarker (MM) erzeugten Magnetflusses und eine Ausgangsseite (10b) des kanalisierten Magnetflusses enthält.

9. Vorrichtung nach Anspruch 8, wobei der im Wesentlichen drehsymmetrische Querschnitt eine rechtwinklige, achteckige, sechseckige, kreisförmige Form hat.

10. Vorrichtung nach Anspruch 8 oder 9, wobei das Element aus Magnetmaterial mindestens außer dem zentralen Bereich (10) einen Endabschluss (11) enthält, der zwischen dem zentralen Bereich (10) und der Eingangsseite (10a) des Magnetflusses angeordnet ist, wobei der Endabschluss (11) orthogonal zum zentralen Bereich (10) ausgerichtet ist.

11. Vorrichtung nach Anspruch 10, wobei das Element aus Magnetmaterial außerdem einen weiteren Endabschluss (12) enthält, der zwischen dem zentralen Bereich (10) und der Ausgangsseite (10b) des Magnetflusses angeordnet ist, wobei der weitere Endabschluss (12) orthogonal zum zentralen Bereich (10) in einer Richtung entgegengesetzt zu derjenigen des Endabschlusses (11) ausgerichtet ist.

12. Gleichstrommotor, insbesondere eines Scheibenwischers eines Kraftfahrzeugs, **dadurch gekennzeichnet, dass** er eine Vorrichtung wie in einem der Ansprüche 1 bis 11 definiert aufweist.

13. Gleichstrommotor nach dem vorhergehenden Anspruch, der ein Schubkurbelsystem (BM) aufweist, das in der Nähe des Rads (W) angeordnet ist, wobei das Schubkurbelsystem (BM) es ermöglicht, die kontinuierliche Drehbewegung des Rads (W) und des Ankers des Motors in eine alternierende Hin- und Her-Bewegung umzuwandeln, wobei die alternierende Hin- und Her-Bewegung zum Beispiel die Betätigung von Scheibenwischerblättern erlaubt.

14. Gleichstrommotor nach einem der Ansprüche 12 und 13, wobei der Abstand (D1) zwischen der Magnetführung (1) und dem Magnetfühler (CM) kleiner als oder gleich 1 mm ist, und der Abstand (D2) zwischen der Magnetführung (1) und dem Magnetmarker (MM) zwischen 5 und 8 mm liegt.

15. Gleichstrommotor nach einem der Ansprüche 12 bis 14, wobei der vom Magnetmarker (MM) erzeugte Magnetfluss das Gehäuse (CA) des Motors durchquert, um zur Magnetführung (1) zu gelangen.

## Claims

1. Device for magnetically detecting the rest position of the armature of a direct current motor, said device comprising a magnetic sensor (CM) of the rest position placed on a plate mounted on the frame (CA) of the motor, said rest position being defined by a magnetic marker (MM) placed on the wheel (W) of the motor attached to the armature, the wheel (W) and the armature being continuously driven in rotation as the motor operates, said magnetic sensor (CM) being placed at a determined distance from the magnetic marker (MM) in the rest position of the armature of the direct current motor, **characterized in that** said device further comprises a magnetic guide (1) placed between said magnetic sensor (CM) and said magnetic marker (MM), said magnetic guide (1) ensuring the channelling of the magnetic flux generated by said magnetic marker (MM) over said determined distance.

2. Device according to Claim 1, wherein said magnetic guide (1) consists of a soft iron element.

3. Device according to Claim 1, wherein said magnetic guide (1) consists of a ferrite element.

4. Device according to Claim 3, wherein said magnetic guide (1) consists of a compressed and annealed magnetic powder ferrite element.

5. Device according to Claim 2, wherein said magnetic guide (1) is formed by a stamped and/or cut soft iron sheet.

6. Device according to one of Claims 1 to 5, wherein said magnetic guide (1) is formed so as to be inserted into a housing (2) formed in the frame (CA) of the motor, said housing (2) extending substantially over all the determined distance (D) separating said magnetic sensor (CM) from said magnetic marker (MM) in the rest position of the armature of the motor.

7. Device according to one of Claims 1 to 6, wherein said magnetic guide (1) is formed as a rectilinear rod or an L-shaped rod making it possible to offset said magnetic sensor (CM) from the vicinity of the path of the magnetic marker (MM) in the movement of the wheel (W).

8. Device according to one of Claims 1 to 7, wherein said magnetic guide (1) is formed by an element of magnetic material and has at least one oblong central part (10) of section substantially of revolution, said central part ensuring the channelling of the magnetic flux and comprising an input face (10a) for the magnetic flux generated by the magnetic marker (MM) and an output face (10b) for the channelled magnetic flux.

9. Device according to Claim 8, wherein the section substantially of revolution is of rectangular, octagonal, hexagonal or circular form.

10. Device according to Claim 8 or 9, wherein said element of magnetic material comprises at least, in addition to said central part (10), an end termination (11) placed between said central part (10) and said input face (10a) for the magnetic flux, said end termination (11) being oriented orthogonally to said central part (10).

11. Device according to Claim 10, wherein said element of magnetic material further comprises another end termination (12) placed between said central part (10) and said output face (10b) for the magnetic flux, said other end termination (12) being oriented orthogonally to said central part (10), in a direction opposite to that of the end termination (11).

12. Direct current motor, notably of a motor vehicle windscreen wiper, **characterized in that** it comprises a device as defined in any one of Claims 1 to 11.

13. Direct current motor according to the preceding claim, comprising a connecting rod system (BM) placed in the vicinity of said wheel (W), said connecting rod system (BM) making it possible to convert the continuous rotational movement of said wheel (W) and of the armature of the motor into a reciprocating to-and-fro movement, said reciprocating to-and-fro movement making it possible, for example, to actuate windscreen wiper blades.

14. Direct current motor according to either one of Claims 12 and 13, in which the distance (D1) between the magnetic guide (1) and the magnetic sensor (CM) is less than or equal to 1 mm, and the distance (D2) between the magnetic guide (1) and the magnetic marker (MM) lies between 5 and 8 mm.

15. Direct current motor according to any one of Claims 12 to 14, in which the magnetic flux generated by said magnetic marker (MM) passes through the frame (CA) of the motor to reach said magnetic guide (1).
